# FASCICULE DE BREVET EUROPEEN

(11) **EP 1 519 806 B1**
(45) Date de publication et mention de la délivrance du brevet: **30.08.2006**
(21) Numéro de dépôt: 03763929.1
(22) Date de dépôt: 04.07.2003
(51) Int. Cl.: B23B 31/10, G02B 6/36, G01N 3/04

(54) **DISPOSITIF DE FIXATION D'UNE FIBRE RIGIDE ET FRAGILE COMPRENANT UNE GAINE MECANIQUEMENT DEFORMABLE ET SUSCEPTIBLE D'ETRE SOUMISE A AU MOINS UNE CONTRAINTE MECANIQUE**
VORRICHTUNG ZUR BEFESTIGUNG EINER STARREN UND SPRÖDEN FASER MIT EINEM MECHANISCH VERFORMBAREN MANTEL, DIE MINDESTENS EINER MECHANISCHEN BELASTUNG AUSGESETZT WERDEN KANN
DEVICE FOR FIXING A RIGID AND BRITTLE FIBER COMPRISING A MECHANICALLY DEFORMABLE CLADDING AND LIABLE TO BE SUBJECTED TO AT LEAST ONE MECHANICAL STRESS

(30) Priorité: 08.07.2002 FR 0208536; 18.07.2002 FR 0209117
(43) Date de publication de la demande: 06.04.2005
(73) Titulaire: COMMISSARIAT A L'ENERGIE ATOMIQUE, 75752 Paris 15ème (FR)
(72) Inventeur: MAURIN, Laurent, Bât. A Rés. "Les Essarts", F-91400 Orsay (FR)
(74) Mandataire: Poulin, Gérard
(86) Numéro de dépôt international: PCT/FR2003/002079
(87) Numéro de publication internationale: WO 2004/007127

(56) Documents cités:
- EP-A- 0 461 339
- DE-A- 3 603 616
- US-A- 2 583 885
- US-A- 3 246 903
- US-A- 4 848 870
- US-A- 5 259 174
- US-A- 5 495 425
- US-A- 5 530 785

## Description

### DOMAINE TECHNIQUE

La présente invention se rapporte, de façon générale, à un ensemble comprenant un dispositif de fixation et une fibre maintenue par le dispositif et constituée d'un coeur en matériau rigide et fragile entouré d'une gaine moins rigide et mécaniquement déformable, la fibre étant susceptible d'être soumise à au moins une contrainte mécanique, une fois fixée sur le dispositif. En particulier, l'invention se rapporte à un ensemble selon le préambule de la revendication 1, lequel est basé sur le document US-A-5 530 785.

Une application privilégiée de l'invention concerne la fixation de fibres optiques, ces fibres étant notamment réalisées avec un coeur en SᵢO₂.

A titre d'exemples, ce type de dispositif de fixation trouve une application toute particulière dans le domaine des extensomètres comprenant une fibre optique dans laquelle est photoinscrit au moins un réseau de Bragg, ou encore dans le domaine des capteurs à fibre optique à réseaux de Bragg, tels que des capteurs de pression ou de densité de gaz.

### ETAT DE LA TECHNIQUE ANTERIEURE

Dans ce domaine technique relatif à l'accrochage sur un support particulier d'une fibre constituée d'un coeur en matériau rigide et fragile entouré d'une gaine moins rigide et mécaniquement déformable, les techniques connues concernent l'accrochage d'une fibre optique. Plusieurs réalisations ont déjà été proposées dans l'art antérieur.

On connaît en effet une première solution technologique, résidant dans le collage de la fibre optique sur un support mécanique.

Cependant, cette solution engendre de nombreux inconvénients majeurs, notamment celui d'une tenue mécanique faiblissant fortement lorsque la température ambiante avoisine 200°C.

Pour remédier à ce problème de tenue mécanique afférant aux colles classiques, il a été proposé d'utiliser des colles à hautes performances telles que des colles chargées, par exemple en silice, ou encore telles que des colles céramiques. Ce type de colle permet en effet de maintenir facilement l'accrochage de la fibre optique sur le support mécanique, à des températures relativement élevées.

En revanche, lors de l'emploi de ces colles à hautes performances, la rigidité de celles-ci est tellement importante qu'elle engendre des contraintes de cisaillement en limite de zone de collage atténuant fortement les possibilités de manipulation de l'ensemble collé, dans la mesure où ce dernier est très fragile et susceptible d'être endommagé lors de sa mise en mouvement.

De plus, la polymérisation des colles à hautes performances et des colles céramiques, comparables à des ciments, nécessite un apport d'énergie qui peut avoir pour conséquence d'endommager la gaine déformable protectrice prévue autour du coeur de la fibre optique, typiquement constitué de SᵢO₂. Par ailleurs, lorsque l'apport d'énergie s'effectue sous forme de chaleur, la mise en oeuvre de la première solution technologique proposée n'est pas envisageable dans des milieux où la chaleur est proscrite, par exemple en raison des risques d'explosion existants.

D'autre part, le vieillissement de la colle entraîne une modification importante de ses propriétés rhéologiques, dont l'évolution au cours du temps reste totalement indéterminée. Ainsi, sur une période relativement longue, le changement des propriétés telles que le module d'Young ne permet en aucun cas de connaître les caractéristiques liées à l'adhésion et au cisaillement des colles.

Il est à noter que lorsque la fibre optique est soumise à une contrainte de traction, cette fibre exerce un effort de cisaillement sur la colle. Ainsi, ce cisaillement vient s'ajouter au cisaillement de la gaine mécaniquement déformable de la fibre optique, provoquant alors une erreur de mesure fortement préjudiciable lorsque la fibre optique est utilisée dans un extensomètre. On peut noter à cet égard qu'un extensomètre est un exemple typique dans lequel une très grande précision d'accrochage de la fibre est requise, pour d'une part assurer la qualité métrologique du dispositif comportant le mandrin, et d'autre part pour réduire la dispersion de calibrage entre plusieurs de ces dispositifs.

Enfin, il est précisé qu'en raison de l'absence d'une maîtrise parfaite de l'écoulement des colles, la technologie employée ne permet pas d'obtenir une reproductibilité aisée de l'ancrage. De plus, l'assemblage effectué entre la fibre optique et le support mécanique est apte à être démonté uniquement en détériorant la fibre optique, ceci constituant un inconvénient majeur en raison du coût relativement élevé d'une fibre optique à réseau de Bragg.

Une seconde solution technologique proposée dans l'art antérieur réside dans le soudage de la fibre optique sur un support mécanique, la fibre ayant été préalablement métallisée en surface.

A titre d'exemple, le soudage peut également être effectué par l'intermédiaire de la fusion locale d'une goutte d'un matériau identique à celui du coeur de la fibre optique à maintenir.

Cependant, dans le cas d'une adjonction d'un revêtement métallique autour de la fibre, l'accrochage est difficile à réaliser dans la mesure où les points de soudure sont à effectuer sur de petites surfaces de contact, et nécessitent par conséquent d'être appliqués avec une extrême précision pour ne pas risquer d'endommager la fibre optique.

Tout comme dans les assemblages par collage mentionnés ci-dessus, la reproductibilité de la soudure est difficile à obtenir, ne permettant ainsi pas de déterminer de manière précise le comportement mécanique de l'ensemble. Par ailleurs, il est à noter que le comportement mécanique de l'ensemble est d'autant plus difficile à déterminer que la soudure provoque elle-même une transformation métallurgique, modifiant les caractéristiques mécaniques de l'assemblage.

D'autre part, outre le fait que ce type d'assemblage ne peut être réalisé dans des milieux où l'apport en énergie est proscrit, les efforts que peut supporter la liaison entre la fibre optique et le revêtement métallique sont relativement faibles. En effet, la liaison obtenue n'est pas une réelle liaison physique, et ne permet donc pas de supporter des efforts importants. Des tests réalisés ont par ailleurs démontré que lors de l'application de sollicitations élevées sur la fibre, le revêtement métallique se déchaussait puis glissait sur cette fibre optique, puisque la gaine protectrice est généralement réalisée en polymère (polyimide ou polyacrylate pour les plus répandues).

Enfin, toujours de la même façon que dans la première solution technologique présentée ci-dessus, l'assemblage obtenu par soudage est un assemblage irréversible, nécessitant une rupture de la fibre optique afin d'être démonté dans le cas le plus défavorable, ou une dégradation des caractéristiques mécaniques de la fibre optique dans le cas le plus favorable.

Contrairement aux solutions mentionnées précédemment, une troisième solution technologique proposée dans l'art antérieur permet d'obtenir un assemblage démontable. Il s'agit en effet d'un cabestan fixe en rotation, autour duquel la fibre est enroulée sur un ou plusieurs tours.

Cependant, ce type d'assemblage n'est pas non plus satisfaisant dans le sens où il ne permet pas d'empêcher totalement le glissement de la fibre optique, lorsque celle-ci est soumise à une contrainte de traction. Ce type d'assemblage, particulièrement rencontré dans le domaine des machines de tests de traction pour la rhéologie, peut également comprendre des mors en caoutchouc disposés parallèlement, afin d'éviter au maximum le glissement de la fibre optique. Néanmoins, malgré la présence de ces mors déformables, des tests ont démontré que lors de l'utilisation d'un tel dispositif de fixation de fibre optique, le glissement apparaissait inévitablement dès que la force de traction dépassait la valeur de 5 N, cette valeur correspondant à un allongement de 0,5% d'une fibre optique standard de 125 µm de diamètre hors gaines protectrices, telle que celles largement utilisées dans le domaine des télécommunications.

En outre, il a également été remarqué que l'enroulement autour du cabestan provoquait des pertes optiques essentiellement engendrées par l'apparition de macro-courbures sur la fibre, ceci étant extrêmement préjudiciable à la bonne transmission d'un signal à travers cette fibre optique. Il est précisé que pour pouvoir obtenir des pertes optiques négligeables, le rayon de courbure d'une fibre optique enroulée autour d'un cabestan devrait être considérablement augmenté, par exemple jusqu'à une valeur supérieure à un centimètre pour les fibres monomodes classiques. Dans un tel cas, l'encombrement du dispositif de fixation deviendrait alors souvent trop important pour pouvoir prétendre entrer dans la composition d'un capteur à fibre optique à réseaux de Bragg.

### EXPOSÉ DE L'INVENTION

L'invention a donc pour but de proposer un ensemble comprenant un dispositif de fixation et une fibre maintenue par le dispositif comprenant un coeur rigide et fragile entouré d'une gaine mécaniquement déformable telle qu'une fibre optique, la fibre étant susceptible d'être soumise à au moins une contrainte mécanique, l'ensemble remédiant au moins partiellement aux inconvénients mentionnés ci-dessus relatifs aux réalisations de l'art antérieur.

Plus précisément, le but de l'invention est de présenter un ensemble autorisant un montage et un démontage de la fibre rigide et fragile sans l'endommager ni lui faire subir de macro-courbures, et apte à maintenir la fibre sans glissement lors de l'application d'une contrainte mécanique telle qu'une force de traction élevée. Dans le cas particulier où cette fibre est une fibre optique, d'un type standard utilisé dans le domaine des télécommunications, cette force de traction peut atteindre par exemple 50 N.

Par ailleurs, l'invention à en outre pour but de proposer un ensemble susceptible de supporter des températures ambiantes s'élevant au-delà de 200°C, et disposant d'un encombrement suffisamment faible pour pouvoir entrer dans la constitution d'un extensomètre à fibre optique, ou d'un capteur à fibre optique à réseaux de Bragg.

Pour ce faire, l'invention a pour objet un ensemble défini dans la revendication 1. Le dispositif de fixation comporte une pluralité de mors répartis autour d'un axe principal de ce dispositif, chaque mors comprenant une surface intérieure constituée d'une portion centrale et de deux portions d'extrémité, les portions d'extrémité étant réalisées de manière à prolonger la portion centrale en s'écartant progressivement de l'axe principal du dispositif, et comportant chacune au moins une partie en contact avec la gaine mécaniquement déformable lorsque le mors occupe une position de serrage. Ce prolongement progressif est réalisé préférentiellement par une surface ayant même tangente que la portion centrale au point où elle s'y raccorde.

Avantageusement, le dispositif de fixation proposé par l'invention est prévu pour que les mors, dans leur position de serrage concentrique maximal, laissent libre dans l'axe du mandrin un orifice au moins assez grand pour permettre le passage du coeur rigide de la fibre sans déformation de celui-ci. Ainsi seule la gaine mécaniquement déformable absorbe les déformations produites lors du serrage du mandrin. Ceci permet des montages et démontages répétés de la fibre, sans que celle-ci nécessite d'être rompue ou fragilisée.

On peut encore définir cette même caractéristique en ce que, dans tout plan perpendiculaire à l'axe du mandrin, lorsque les mors sont serrés au maximum, ils laissent libre autour de cet axe un trou dont le plus petit rayon à compter de cet axe est au moins égal au rayon extérieur du coeur rigide et fragile de la fibre.

Dans le cas de l'application de l'ensemble selon l'invention au maintien d'une fibre optique, la déformation de celle-ci engendrée par le serrage concentrique des mors s'exerce exclusivement sur la gaine mécaniquement déformable, généralement en polymère, et non sur le coeur en silice de la fibre assurant la transmission optique. Ceci s'explique notamment par le fait que la gaine, de préférence en polyimide, dispose d'un module de Young environ trente fois inférieur à celui de la silice, habituellement constitutive du coeur de la fibre optique. D'autre part, lorsque la gaine est en polyacrylate, ce facteur peut être sensiblement plus élevé.

Ainsi, il est relativement simple d'adapter la conception du dispositif afin d'obtenir un ancrage démontable très résistant, n'engendrant pas de dégradation ni mécanique ni optique du coeur de la fibre, et n'impliquant par conséquent aucune fragilisation mécanique ni perte optique. A titre d'exemple, des tests réalisés ont montré que pour une longueur des mors avoisinant 10 mm et pour une fibre optique standard de 125 µm de diamètre de coeur en silice et de 100 mm de long, le dispositif de fixation selon l'invention était apte à maintenir la fibre optique sans rupture ni glissement, pour des efforts de traction pouvant atteindre 50 N. Notons à titre indicatif que les solutions proposées dans l'art antérieur ne supportaient que des efforts de traction de l'ordre 5 N, avant de provoquer un glissement de la fibre ou une rupture de cette dernière.

La solution technologique a notamment été retenue en raison de la constatation qu'une fibre au coeur rigide et fragile, telle qu'une fibre optique, était capable de résister à des efforts de compression radiale très importants, et de ce fait susceptible de supporter des contraintes de compression engendrées par des mors de serrage concentriques. Néanmoins, dans l'art antérieur, des mors de serrage concentriques n'ont jamais été mis en oeuvre pour réaliser des dispositifs de fixation de ce type de fibres. Cela s'explique notamment en raison de l'existence d'un préjugé technique visant à employer des mors de serrage uniquement pour maintenir des matériaux non fragiles, dont la zone élastique est directement raccordée à une zone ductile permettant d'éviter la cassure nette du matériau, dès l'application d'un certain niveau de contrainte.

De plus, après avoir effectué d'autres analyses ayant conduit à la conclusion que la rupture d'une fibre optique maintenue par des mors de serrage était due aux contraintes de cisaillement locales aux extrémités des mors et non aux contraintes de compression facilement supportées par le coeur de la fibre en silice, le dispositif de fixation selon l'invention a été conçu afin d'engendrer un cisaillement minimal de la fibre. La conception du dispositif a d'ailleurs été particulièrement étudiée pour limiter les cisaillements de la fibre optique au niveau des parties où celle-ci subissait une concentration de contraintes maximale, à savoir au niveau des parties en contact avec les extrémités de chaque mors. Ainsi, l'invention a donc été réalisée en surmontant un préjugé technique existant dans le domaine considéré, en prévoyant un dispositif de fixation comportant des mors disposant chacun d'une surface intérieure, dont les extrémités s'écartent progressivement de l'axe principal du dispositif afin de diminuer le gradient de contraintes développé par l'effort de serrage, atténuant ainsi l'intensité des cisaillements devant être supportés par la fibre maintenue.

De cette manière, lorsque la fibre est une fibre optique équipée d'au moins un réseau de Bragg dans le but d'effectuer des mesures extensométriques, la diminution des cisaillements résultants du contact direct des mors avec la gaine permet en outre de réduire considérablement l'erreur de mesure, notamment par rapport aux techniques consistant à introduire un milieu matériel déformable supplémentaire comme de la colle, entre la fibre et le support d'accrochage. A titre d'exemple, pour un effort de traction de 10 N, il a été constaté que l'erreur induite sur la mesure de la déformation par le réseau de Bragg était de l'ordre de 10⁻⁷, c'est-à-dire inférieure à la résolution intrinsèque d'un réseau de Bragg standard.

D'autre part, la conception très simple du dispositif selon l'invention offre la possibilité de diminuer encore davantage la déformation de la fibre, en augmentant par exemple la longueur des mors dans le but de répartir l'effort de serrage sur une plus grande surface de contact, afin de réduire les contraintes radiales de serrage dans les mêmes proportions. Notons que cette augmentation de la longueur des mors peut également contribuer à rendre l'erreur de mesure due au montage inférieure à la résolution intrinsèque d'un réseau de Bragg standard.

En outre, le dispositif de fixation proposé autorise un accrochage de la fibre optique exclusivement mécanique, permettant son utilisation dans des milieux où l'apport en énergie par chauffage est proscrit.

Enfin, il est précisé que les éléments constitutifs du dispositif de fixation selon l'invention, celle-ci étant applicable à tout élément du type fibre comprenant un coeur rigide et fragile entouré d'une gaine mécaniquement déformable, sont facilement réalisables dans des dimensions suffisamment faibles pour pouvoir être appliqués à des fibres optiques et intégrés à tout capteur à fibre optique, notamment à fibre optique à réseaux de Bragg où le principe consiste à mesurer une grandeur physique par la variation de longueur de la fibre.

Préférentiellement, pour chaque mors, les portions d'extrémité sont des surfaces dont une section selon un plan quelconque passant par l'axe principal du dispositif est un segment de droite ou une ligne courbe. De façon avantageuse, les jonctions entre la portion centrale et les portions d'extrémité peuvent être polies de sorte que la surface intérieure soit dépourvue d'angle vif, cette caractéristique spécifique engendrant une diminution supplémentaire de la contrainte de cisaillement appliquée sur la fibre optique.

De manière préférée, la surface intérieure de chaque mors est une surface dépourvue d'angle vif. En d'autres termes, pour chaque mors, les portions d'extrémité et la portion centrale de chaque surface intérieure sont des surfaces qui se raccordent tangentiellement, de manière à ce que leur intersection avec un plan quelconque passant par l'axe principal du dispositif soit une ligne courbe continue sans point anguleux.

De manière préférée, pour chaque mors, la surface intérieure est une surface dont une section selon un plan quelconque perpendiculaire à l'axe principal du dispositif est un arc de cercle de rayon supérieur au rayon extérieur nominal de la gaine mécaniquement déformable. Ainsi, lors du serrage des mors du dispositif sur la fibre optique, la surface intérieure de chacun des mors dispose d'une forme particulièrement bien adaptée pour engendrer une déformation progressive et uniforme de la gaine.

Une autre solution pourrait également consister à prévoir que pour chaque mors, la surface intérieure est une surface dont une section selon un plan quelconque perpendiculaire à l'axe principal du dispositif est un segment de droite, de manière à ce qu'au moins la portion centrale de la surface intérieure soit une surface plane, facilement réalisable par usinage.

Préférentiellement, lorsque les mors occupent leur position de serrage, une section des surfaces intérieures selon un plan quelconque perpendiculaire à l'axe principal du dispositif est une ligne fermée. Cela permet de façon avantageuse d'obtenir une déformation quasi-uniforme de la gaine et de prévenir un écrasement accidentel du coeur rigide et. fragile de la fibre, cette gaine étant encore plus faiblement sollicitée en cisaillement lorsque seule une partie des portions d'extrémité de chaque mors est en contact avec cette gaine mécaniquement déformable.

Préférentiellement, les mors du dispositif sont des mors métalliques du type inoxydables, supportant des températures ambiantes pouvant atteindre au moins 200°C. En effet, l'ensemble des éléments étant métalliques et inoxydables, aucun d'entre eux n'est susceptible de se dégrader du fait de la chaleur, et l'erreur de mesure extensométrique provoquée par la dilatation des mors a été .évaluée à une valeur inférieure à la résolution intrinsèque d'un réseau de Bragg standard photoinscrit dans une fibre en silice enrobée d'une gaine polyimide d'une épaisseur standard d'environ 10µm, lorsque la longueur des mors n'excède pas 10 mm.

Enfin, on peut prévoir que chaque mors comprend également une surface extérieure en forme de portion conique, chaque surface extérieure étant apte à coopérer avec une surface intérieure conique complémentaire prévue sur un support de mors du dispositif. En concevant par exemple une surface complémentaire conique, dont l'angle du cône mesuré dans un plan coupant son axe de symétrie avoisine 7°, un simple serrage à la main est suffisant pour permettre au dispositif de fixation de supporter des efforts de traction aux alentours de 20 N. De plus, comme cela a été indiqué ci-dessus, un serrage plus performant à l'aide d'un outil adapté peut autoriser des efforts de traction de l'ordre de 50 N, sans provoquer de dégradation au niveau du coeur de la fibre optique, dès lors que la géométrie des mors est prévue pour que, serrés au maximum, ils laissent libre un alésage dont le diamètre est au moins égal à celui du coeur de la fibre.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en coupe du dispositif de fixation pour la réalisation de la présente invention ;
- la figure 2 représente une vue partielle de dessus du dispositif de fixation représenté sur la figure 1, lorsque les mors du dispositif occupent une position de serrage ;
- la figure 3 représente une vue en coupe prise le long de la ligne III-III de la figure 2, et montrant la coopération entre les mors et la fibre optique maintenue entre ces derniers ;
- la figure 4 représente une vue partielle de dessus d'un ensemble de fixation selon un mode de réalisation préféré de la présente invention, lorsque les mors du dispositif occupent une position de serrage ;
- la figure 5 représente une vue en coupe prise le long de la ligne V-V de la figure 4, et montrant la coopération entre les mors et la fibre optique maintenue entre ces derniers.

### EXPOSÉ DÉTAILLÉ DE MODES DE RÉALISATION PRÉFÉRÉS

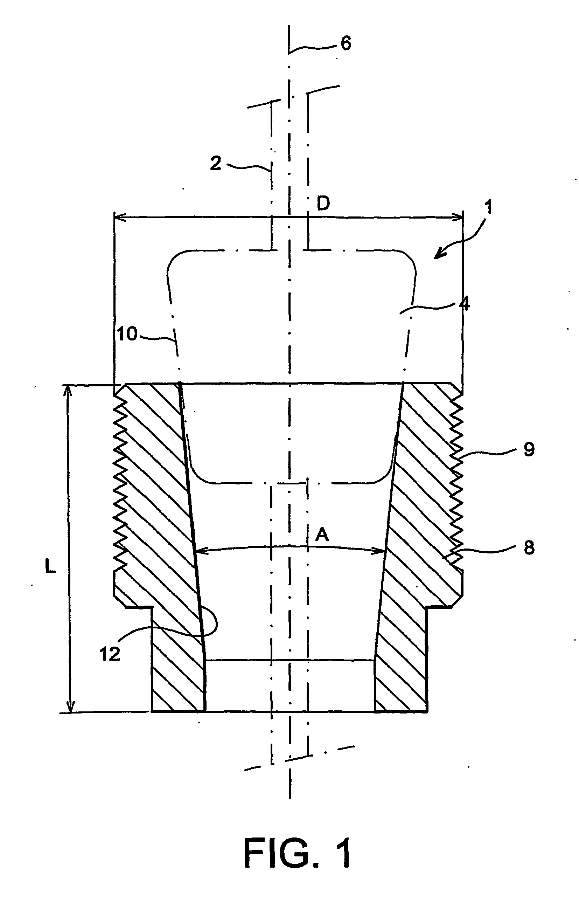

En référence à la figure 1, on peut apercevoir un dispositif de fixation 1 d'une fibre optique 2, selon un mode de réalisation préféré.

Le terme « fibre optique » sera utilisé dans le reste de la description, mais il est bien entendu possible d'appliquer cette invention à tout élément du type fibre comprenant un coeur rigide et fragile entouré d'une gaine mécaniquement déformable.

Ce type de dispositif 1 est susceptible d'être utilisé dans différents systèmes, et plus spécifiquement dans des systèmes où là fibre optique 2 est soumise à au moins une contrainte mécanique telle que la traction.

Ainsi, à titre indicatif, le dispositif de fixation 1 peut entrer dans la constitution d'un extensomètre à au moins un réseau de Bragg, par exemple pour la surveillance d'ouvrages d'art, ou encore dans la constitution d'un capteur à fibre optique à réseaux de Bragg, du type capteur de pression ou de densité d'un gaz. Par ailleurs, le dispositif 1 peut également être utilisé dans des machines de tests mécaniques pour la rhéologie, afin de maintenir la fibre optique dont les caractéristiques techniques telles que la résistance à la traction sont à déterminer. Ainsi, dans la majorité des systèmes où le dispositif de fixation 1 est utilisé, deux de ces dispositifs sont généralement nécessaires afin d'accrocher respectivement chacune des deux extrémités de la fibre optique 2.

Le dispositif de fixation 1 comprend une pluralité de mors 4, répartis autour d'un axe principal 6 du dispositif 1, confondu avec l'axe longitudinal de la fibre 2 lorsque celle-ci est maintenue sur le dispositif 1. Les mors 4 sont placés dans un support de mors 8, ce dernier étant susceptible d'être assemblé sur un support mécanique quelconque (non représenté), par exemple par vissage à l'aide de sa surface extérieure filetée 9. Les mors de serrage 4 disposent préférentiellement chacun d'une surface extérieure 10 en forme de portion conique, coopérant avec une surface intérieure conique complémentaire 12, prévue sur le support de mors 8. Ainsi, l'activation d'un système de serrage (non représenté) du dispositif 1 permet de faire glisser les mors 4 vers le sommet de la surface intérieure conique complémentaire 12, et par conséquent d'engendrer un serrage radial de la fibre optique 2 se trouvant entre les mors 4. Préférentiellement, la fibre optique 2 serrée comporte, hors de la partie en contact avec le dispositif 1, au moins un réseau de Bragg (non représenté). Notons que le dispositif de fixation 1 peut être conçu de manière à être auto-serrant, à savoir apte à autoriser le maintien en compression radiale de l'ensemble formé par le dispositif 1 et la fibre optique 2, par simple traction de cette dernière, compte tenu du frottement non nul existant entre les mors 4 et la surface extérieure de la gaine de la fibre optique 2. De plus, l'accrochage de la fibre optique 2 sur le dispositif de fixation 1 est réalisable en tout point de cette fibre, puisque son maintien sur le dispositif 1 est exclusivement effectué par l'intermédiaire d'un simple serrage mécanique.

Il est précisé qu'avec un angle de cône A d'environ 7°, une longueur L du support de mors 8 d'environ 14 mm pour un diamètre extérieure D de l'ordre de 10 mm, l'activation manuelle du système de serrage du dispositif 1 permet de maintenir une fibre optique dont le diamètre extérieur de la gaine est de 150 µm, sans glissement ni rupture, pour des efforts de traction pouvant atteindre 20 N. D'autre part, l'activation du système de serrage à l'aide d'un, outil approprié permet d'élever la valeur de l'effort de traction supportable jusqu'à 50 N.

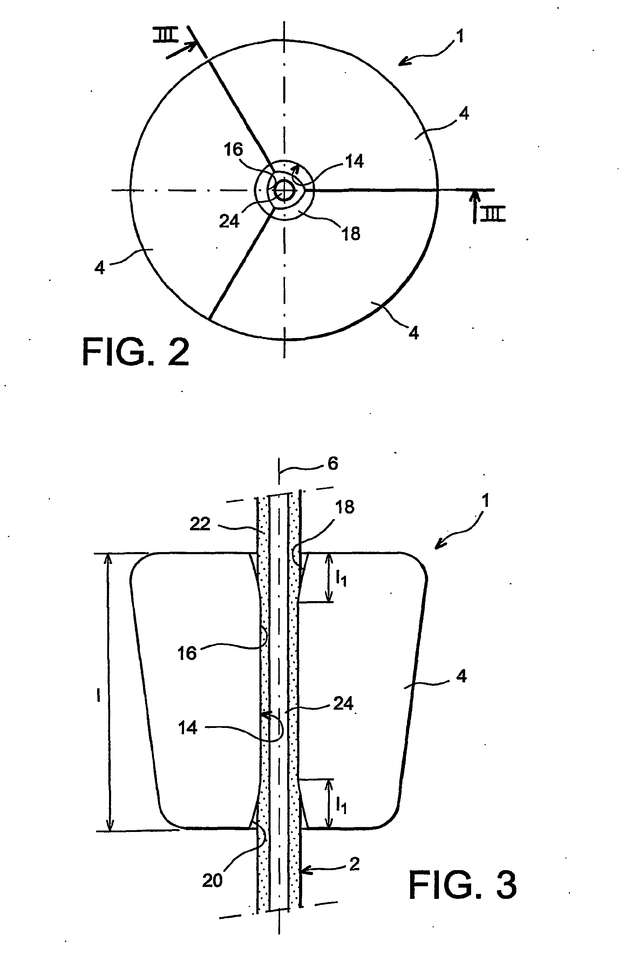

Les figures 2 et 3 illustrent de manière plus précise les mors de serrage 4 utilisés dans le dispositif de fixation 1 de la figure 1, lorsqu'ils sont dans une position de serrage et qu'ils coopèrent avec une fibre optique 2. Notons que pour des raisons de clarté, seul le coeur 24 de la fibre optique 2 en coopération avec les mors de serrage 4 a été représentée sur la figure 2.

Dans le mode de réalisation préféré décrit du dispositif de fixation 1, les mors de serrage 4 sont au nombre de trois. Naturellement, le nombre de mors 4 pourrait bien entendu être supérieur à cette valeur, sans sortir du cadre de l'invention.

Afin de réaliser le maintien de la fibre optique 2 par rapport au dispositif 1, les mors de serrage 4 disposent chacun d'une surface intérieure 14, se composant d'une portion centrale 16 prolongée par deux portions d'extrémité 18 et 20, situées de part et d'autre de la portion centrale 16.

Comme le montre clairement la figure 2, les mors 4 en position de serrage sont en contact les uns avec les autres, de manière à exercer une pression relativement uniforme sur la fibre optique 2 maintenue en compression. En d'autres termes, une section des surfaces intérieures 14 selon un plan quelconque perpendiculaire à l'axe principal 6 du dispositif 1 est une ligne fermée, lorsque les mors 4 sont serrés au maximum.

Les mors 4 utilisés, de préférence d'une longueur 1 de l'ordre de 12 mm, permettent donc de maintenir la fibre optique 2 par serrage. Le dispositif de fixation 1 est alors conçu de manière à ce que le serrage de la fibre optique 2 déforme uniquement la gaine mécaniquement déformable extérieure 22, prévue pour protéger le coeur 24 de cette fibre. Ainsi, ni les caractéristiques de transmission optique de la fibre 2 ni ses caractéristiques mécaniques ne sont altérées par le serrage, ceci étant réalisable grâce à la gaine mécaniquement déformable 22 en polymère, tandis que le coeur 24 de cette fibre est habituellement réalisé en silice. On notera qu'une pression optimale de serrage de la fibre optique 2, engendrant une déformation de la gaine 22 sans provoquer la déformation du coeur 24, a été mesurée aux alentours de 10⁸ Pa pour une gaine 22 en polyimide d'environ 10 µm d'épaisseur nominale, correspondant à son épaisseur moyenne lorsqu'elle n'a pas.encore été comprimée.

Les mors de serrage 4 sont fabriqués de préférence dans un matériau suffisamment rigide pour ne pas subir de déformation au contact de la gaine 22 de la fibre 2, lorsqu'ils sont en position de serrage. A titre d'exemple, pour provoquer la déformation de la gaine mécaniquement déformable 22 sans être déformés, les mors de serrage 4 seront préférentiellement métalliques.

Comme on peut le voir sur la figure 3, pour chaque mors 4 du dispositif de fixation 1, les portions d'extrémité 18 et 20 prolongent la portion centrale 16 de la surface intérieure 14, en s'écartant progressivement de l'axe 6 du dispositif 1. Cette caractéristique spécifique a pour but de diminuer le cisaillement de la gaine mécaniquement déformable 22, au niveau où la contrainte de cisaillement engendrée est théoriquement la plus élevée, à savoir au niveau des extrémités des mors 4. De cette façon, la gaine mécaniquement déformable 22 est déformée et comprimée progressivement le long d'au moins une partie de chacune des portions d'extrémités 18 et 20, et permet par conséquent à la fibre optique 2 de supporter des efforts importants de traction sans être rompue ni mécaniquement endommagée.

Notons que la géométrie « adoucie » des surfaces intérieures 14 des mors 4 autorise également la sollicitation de la fibre optique 2 en traction selon un axe s'écartant de l'axe principal 6 du dispositif 1 d'un angle de quelques degrés, sans provoquer de rupture de cette fibre lors de sa manipulation.

De préférence, les mors 4 sont conçus de sorte que lorsqu'ils occupent leur position de serrage, seule une partie de chacune des portions d'extrémité 18 et 20 est en contact avec la gaine mécaniquement déformable 22 de la fibre optique 2. On pourra par exemple prévoir que la partie de chacune des portions d'extrémité 18 et 20 en contact avec la fibre 2 correspond en terme de surface à 1/3 de la surface totale de la portion d'extrémité 18,20 concernée. Ainsi, au niveau de la jonction entre l'une quelconque des portions d'extrémité 18,20 et la portion centrale 16 de la surface intérieure 14, la gaine mécaniquement déformable 22 est comprimée au maximum sans engendrer de déformation excessive pour le matériau constituant la gaine 22, et très en dessous du seuil de contraintes qui endommagerait le coeur 24 de la fibre 2, tandis que l'effort de compression diminue progressivement jusqu'à ce que la gaine mécaniquement déformable 22 perde le contact avec la portion d'extrémité 18,20, et retrouve son diamètre nominal extérieur.

Dans ce mode de réalisation préféré décrit du dispositif de fixation 1 selon l'invention, pour chaque mors 4, les portions d'extrémité 18 et 20 sont des surfaces dont une section selon un plan quelconque passant par l'axe principal 6 du dispositif 1 est une ligne courbe. Cette solution facilite grandement la déformation progressive de la gaine mécaniquement déformable 22, ainsi que la diminution du cisaillement appliqué à cette fibre optique 2.

Préférentiellement, on pourra prévoir que la ligne courbe est un arc de cercle s'étendant sur une longueur l₁ suivant l'axe principal 6 du dispositif 1, la longueur l₁ correspondant à environ 1/6 de la longueur totale l du mors 4 selon le même axe.

Toujours en référence aux figures 2 et 3, pour chaque mors 4 du dispositif de fixation 1, la surface intérieure 14 est une surface dont une section selon un plan quelconque perpendiculaire à l'axe principal du dispositif est un arc de cercle de rayon supérieur au rayon extérieur de la gaine mécaniquement déformable 22. Notons que le rayon de cet arc de cercle est constant sur toute la portion centrale 16. Mais, si ce plan perpendiculaire à l'axe s'éloigne de la portion centrale 16 et coupe l'une des portions d'extrémité 18 ou 20, le rayon de cet arc de cercle augmente. A titre d'exemple, comme on peut l'apercevoir sur la figure 2, la ligne fermée correspondant à la section des surfaces intérieures 14 au niveau des portions centrales 16 est constituée de trois arcs de cercle identiques, dont les extrémités sont jointes deux à deux.

Par ailleurs, il est à noter que les surfaces intérieures 14 sont conçues de façon à ce que lorsque les mors 4 sont en position de serrage, les portions centrales 16 définissent un espace fermé latéralement, conçu de manière à être suffisamment important pour pouvoir recevoir une fibre optique 2 dépourvue de gaine mécaniquement déformable. En d'autres termes, lorsque les mors 4 sont serrés au maximum comme cela est représenté sur la figure 2, dans tout plan perpendiculaire à l'axe principale 6, ces mors 4 forment une ligne fermée centrée sur l'axe 6 et dont la plus petite distance entre ce dernier et la ligne fermée est au moins égale au rayon extérieur du coeur rigide et fragile 24 de la fibre 2. Avec une telle conception, le coeur 24 de la fibre optique 2 n'est ainsi pas déformé lors du serrage des mors 4, contrairement à la gaine mécaniquement déformable 22 en polymère dont le module de Young est environ trente fois inférieur à celui du coeur 24 en silice, dans le cas d'une fibre standard gainée en polyimide.

Enfin, pour éviter encore davantage les effets néfastes de cisaillement sur la fibre optique 2, les jonctions entre la portion centrale 16 et les portions d'extrémité 18 et 20 peuvent être polies, dans le but de réduire au maximum la concentration de contraintes de cisaillement au niveau de ces jonctions. Il est alors possible d'effectuer un polissage au micron, par l'intermédiaire de moyens couramment employés lorsque les surfaces à polir sont destinées à entrer en contact avec une fibre optique.

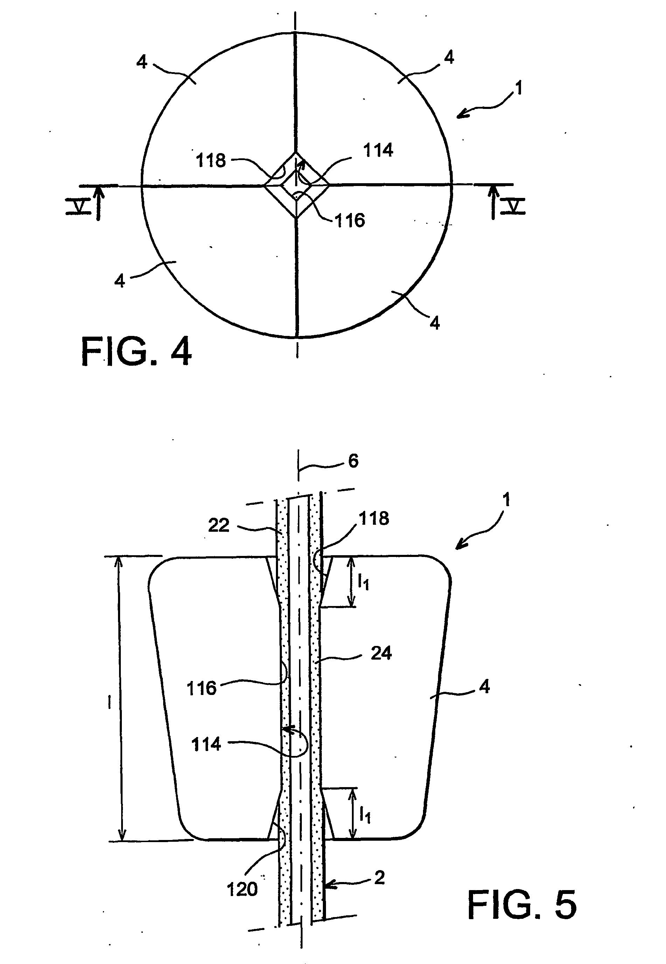

Selon un autre mode de réalisation préféré de la présente invention représenté sur les figures 4 et 5, seuls la géométrie de la surface intérieure 114 des mors 4 et le nombre de ces mors 4 diffërent par rapport au mode de réalisation préféré décrit ci-dessus.

En effet, les mors de serrage 4 sont identiques et au nombre de quatre, toujours en contact les uns avec les autres lorsqu'ils occupent leur position de serrage de la fibre optique 2. Bien entendu, le nombre de mors 4 pourrait être supérieur à cette valeur, sans sortir du cadre de l'invention.

Comme précédemment, pour chaque mors de serrage 4 du dispositif 1, la surface intérieure 114 comprend une portion centrale 116, prolongée par deux portions d'extrémité 118 et 120 s'écartant progressivement de l'axe principal 6 du dispositif 1. De plus, chacune des portions 116, 118 et 120 de la surface intérieure 114 sont de dimensions similaires à celles des portions 16, 18 et 20 du mode de réalisation précédent.

Plus spécifiquement en référence à la figure 5 où la coopération entre les mors 4 et la fibre optique 2 est représentée (la fibre optique n'étant pas représentée sur la figure 4 pour des raisons de clarté), les portions d'extrémité 118 et 120 sont des surfaces dont une section selon un plan quelconque passant par l'axe principal 6 du dispositif 1 est un segment de droite. En outre, la surface intérieure 114 est une surface dont une section selon un plan quelconque perpendiculaire à l'axe principal 6 du dispositif 1 est un segment de droite.

En d'autres termes, on peut prévoir que la portion centrale 116 de la surface intérieure 114 est une surface plane, et que les portions d'extrémité 118 et 120 sont également des surfaces planes du type chanfrein. En tout état de cause, lorsque les mors 4 occupent leur position de serrage, une section des surfaces intérieures 114 selon un plan quelconque perpendiculaire à l'axe principal 6 du dispositif 1 est une ligne fermée, du type formant un carré. Lorsque la section des surfaces intérieures 114 est prise à un niveau quelconque des portions centrales 116, la section carrée est toujours identique et la longueur du côté de ce carré est strictement supérieure au diamètre du coeur 24 de la fibre optique 2. En revanche, au niveau des portions d'extrémité 118 et 120, en raison de la présence de surfaces du type chanfrein, la section carrée est grandissante au fur et à mesure que l'on s'éloigne des portions centrales 116.

Lors de la réalisation de tels mors de serrage 4 particulièrement facile à effectuer par usinage ou polissage du fait de la planéité des surfaces, les jonctions entre la portion centrale 116 et les portions d'extrémité 118 et 120 sont alors à polir soigneusement, par exemple au micron. De cette façon, tout comme dans le mode de réalisation précédemment décrit, la surface intérieure 114 est dépourvue d'angle vif réduisant ainsi la concentration des cisaillements sur la fibre optique 2 maintenue. En d'autres termes, les portions d'extrémité 118 et 120 et la portion centrale 116 de chaque surface intérieure 114 se raccordent tangentiellement, de manière à ce que leur intersection avec un plan quelconque passant par l'axe principal 6 du dispositif 1 soit une ligne ne présentant pas de point anguleux.

La géométrie plane des portions centrales 116 étant moins adaptée que la géométrie courbée du mode de réalisation précédent pour comprimer uniformément la gaine 22, les portions centrales 116 doivent par conséquent présenter un excellent état de surface, afin d'éviter les surpressions locales. Les surpressions peuvent alors être évitées en prévoyant des tolérances d'usinage de l'ordre de +0 et -0,005 mm pour la réalisation des portions centrales 116.

Ainsi, de la même manière que précédemment, la gaine mécaniquement déformable en polymère 22 de la fibre optique 2 est déformée progressivement le long des portions d'extrémité 118 et 120, jusqu'à perdre le contact avec ces portions et retrouver son diamètre extérieur nominal. De plus, le rapport entre la surface des parties des portions d'extrémité 118 et 120 en contact avec la gaine 22 et la surface totale de ces surfaces est similaire à celle indiquée dans le mode de réalisation préféré précédemment décrit.

Des essais ont montré que pour une longueur 1 des mors 4 de l'ordre de 12 mm, le dispositif de fixation 1 était capable de maintenir une fibre optique 2 sans glissement ni rupture, pour une force de traction avoisinant 50 N. Ces essais ont été mis en oeuvre à l'aide d'une fibre optique 2 disposant d'un diamètre extérieur nominal, de 150 µm mesuré à l'extérieur d'une gaine 22 standard en polyimide, mais le dispositif de fixation 1 selon l'invention peut bien entendu maintenir des fibres optiques ou autres de diamètres supérieurs.

D'autre part, le dispositif de fixation 1 présenté dans les deux modes de réalisation préférés ci-dessus est particulièrement bien adapté à des températures élevées telles que 200°C, dans la mesure où les éléments du dispositif 1 sont métalliques et préférentiellement inoxydables. Par conséquent, pour des mors de serrage 4 d'une longueur 1 d'environ 10 mm, la dilatation de ces derniers est extrêmement minime et n'influe pas sur les mesures extensométriques réalisées. Cependant, dans le cas où les mors de serrage 4 s'étendent sur une longueur plus conséquente, par exemple supérieure à environ 100 mm, le phénomène de dilatation des mors est plus important et doit être de préférence neutralisé afin que les mesures effectuées entre ces mors 4 ne soient pas erronées. Pour faire face à ce problème, il est possible de réaliser les mors de serrage 4 dans des matériaux métalliques peu dilatants, ou encore d'adjoindre un montage mécanique compensateur.

En outre, il est naturellement indiqué que la géométrie des surfaces intérieures 14 et 114 n'est pas limitée à celles décrites dans le deux modes de réalisation préférés décrits ci-dessus. A titre d'exemple, la géométrie des surfaces intérieures pourrait résulter d'une combinaison des deux géométries présentées, de manière a disposer d'une portion centrale courbée et de portions d'extrémité planes, ou inversement.

Bien entendu, diverses modifications peuvent être apportées par l'homme du métier aux dispositifs de fixation 1 d'une fibre optique 2 qui viennent d'être décrits, uniquement à titre d'exemples non limitatifs.

Enfin, comme mentionné ci-dessus, ce dispositif de fixation 1 peut entrer dans la constitution de tout type de capteur où une grandeur est mesurée par la variation de longueur d'un fil, d'un tube ou d'une fibre fragile comprenant une gaine mécaniquement déformable, et notamment une fibre optique. Parmi ces capteurs à fibre optique, il est particulièrement avantageux pour les capteurs à réseau de Bragg qui détectent de très faibles variations de longueur entre deux points d'accrochage d'une fibre portant un ou plusieurs de ces réseaux.

## Revendications

1. Ensemble comprenant un dispositif de fixation (1) et une fibre (2) maintenue par ledit dispositif (1) et comprenant un coeur rigide et fragile (24) entouré d'une gaine mécaniquement déformable (22), ladite fibre (2) étant susceptible d'être soumise à au moins une contrainte mécanique, ledit dispositif de fixation (1) comportant une pluralité de mors (4) répartis autour d'un axe principal (6) du dispositif (1) et occupant une position de serrage, chaque mors (4) comprenant une surface intérieure (14,114) constituée d'une portion centrale (16,116) et de deux portions d'extrémité (18, 20, 118,120), lesdites portions d'extrémité (18,20,118,120) étant réalisées de manière à prolonger la portion centrale (16,116) en s'écartant progressivement de l'axe principal (6) dudit dispositif (1), **caractérisé en ce qu'**une section des surfaces intérieures (14,114) selon un plan quelconque perpendiculaire à l'axe principal (6) du dispositif (1) est une ligne fermée, et **en ce que** seule une partie de chacune des portions d'extrémité (18,20,118,120) est en contact avec la gaine mécaniquement déformable (22) de la fibre (2).

2. Ensemble selon la revendication 1, **caractérisé en ce que** pour chaque mors (4), les portions d'extrémité (118,120) sont des surfaces dont une section selon un plan quelconque passant par l'axe principal (6) du dispositif (1) est un segment de droite.

3. Ensemble selon la revendication 1, **caractérisé en ce que** pour chaque mors (4), les portions d'extrémité (18,20) sont des surfaces dont une section selon un plan quelconque passant par l'axe principal (6) du dispositif (1) est une ligne courbe.

4. Ensemble selon l'une quelconque des revendications précédentes, **caractérisé en ce que** la surface intérieure (14,114) de chaque mors (4) est une surface dépourvue d'angle vif.

5. Ensemble selon l'une quelconque des revendications précédentes, **caractérisé en ce que** pour chaque mors (4), la surface intérieure (14) est une surface dont une section selon un plan quelconque perpendiculaire à l'axe principal (6) du dispositif (1) est un arc de cercle de rayon supérieur au rayon extérieur nominal de la gaine mécaniquement déformable (22).

6. Ensemble selon l'une quelconque des revendications 1 à 4, **caractérisé en ce que** pour chaque mors (4), la surface intérieure (114) est une surface dont une section selon un plan quelconque perpendiculaire à l'axe principal (6) du dispositif (1) est un segment de droite.

7. Ensemble selon l'une quelconque des revendications précédentes, **caractérisé en ce que** les mors (4) dudit dispositif (1) sont des mors métalliques.

8. Ensemble selon l'une quelconque des revendications précédentes, **caractérisé en ce que** chaque mors (4) comprend également une surface extérieure (10) en forme de portion conique, chaque surface extérieure (10) étant apte à coopérer avec une surface intérieure conique complémentaire (12) prévue sur un support de mors (8) dudit dispositif (1).

9. Ensemble selon l'une quelconque des revendications précédentes, **caractérisé en ce que** la fibre est une fibre optique.

10. Ensemble selon l'une quelconque des revendications précédentes, **caractérisé en ce qu'**il est apte à être utilisé dans un extensomètre et/ou dans un capteur à fibre optique à réseau de Bragg.

## Claims

1. Assembly comprising a fixing device (1) and a fibre (2) maintained by said device (1) and comprising a rigid and brittle core (24) surrounded by a mechanically deformable cladding (22), said fibre (2) possibly being subjected to at least one mechanical stress, said clamping device (1) comprising several jaws (4) distributed around a main axis (6) of this device (1), each jaw (4) comprising an inner surface (14, 114) composed of a central portion (16, 116) and two end portions (18, 20, 118, 120), said end portions (18, 20, 118, 120) being made so as to prolong the central portion (16, 116) by gradually moving away from the main axis (6) of said device (1), **characterized in that** a section of the inner surfaces (14, 114) along a random plane perpendicular to the main axis (6) of the device (1) is a closed line, and **in that** only part of each of the end portions (18, 20, 180, 120) is in contact with the mechanically deformable cladding (22) of the fibre (2).

2. Assembly according to claim 1, **characterized in that** for each jaw (4), the end portions (118, 120) are surfaces for which a section defined by any plane passing through the main axis (6) of the device (1) is a line segment.

3. Assembly according to claim 1, **characterized in that** for each jaw (4), the end portions (18, 20) are surfaces for which a section defined by any plane passing through the main axis (6) of the device (1) is a curved line.

4. Assembly according to any one of the above claims, **characterized in that** the inner surface (14, 114) of each jaw (4) is a surface with no sharp angle.

5. Assembly according to any one of the above claims, **characterized in that** for each jaw (4), the inner surface (14) is a surface for which a section defined by any plane perpendicular to the main axis (6) of the device (1) is an arc of circle with a radius greater than the nominal outside radius of the mechanically deformable cladding (22).

6. Assembly according to any one of claims 1 to 4, **characterized in that** the inner surface (114) of each jaw (4) is a surface for which a section defined by any plane perpendicular to the main axis (6) of the device (1) is a line segment.

7. Assembly according to any one of the above claims, **characterized in that** the jaws (4) of said device (1) are metallic jaws.

8. Assembly according to any one of the above claims, **characterized in that** each jaw (4) also comprises an outer surface (10) in the form of a conical portion, each outer surface (8) cooperating with a complementary conical inner surface (12) provided on a jaw support (8) of said device (1).

9. Assembly according to any one of the above claims, **characterized in that** it is capable of holding an optical fibre.

10. Assembly according to any one of the above claims, **characterized in that** it can be used in a strain gauge and/or in a Bragg grating optical fibre sensor.

## Patentansprüche

1. System, eine Befestigungsvorrichtung (1) und eine durch die Vorrichtung (1) festgehaltene Faser (2) umfassend, die einen starren und spröden Kern (24) enthält, umgeben von einem mechanisch verformbaren Mantel (22), wobei die genannte Faser (2) wenigstens einer mechanischen Belastung ausgesetzt werden kann und die mechanische Vorrichtung (1) eine Vielzahl von Klemmbacken (4) umfasst, die um eine Hauptachse (6) der Vorrichtung (1) herum vertailt sind und eine Klemmstellung einnehmen, wobei jede Klemmbacke (4) eine Innenoberfläche (14, 114) umfasst, gebildet durch einen Mittelabschnitt (16, 116) und zwei Endabschnitte (18, 20, 118, 120), und die Endabschnitte (18, 20, 118, 120) so realisiert sind, dass sie den Mittelabschnitt (16, 116) verlängern indem sie sich progressiv von der Hauptachse (6) der Vorrichtung (1) entfernen,
**dadurch gekennzeichnet, dass** ein Querschnitt der Innenoberflächen (14, 114) gemäß irgend einer zu der Hauptachse (6) der Vorrichtung (1) senkrechten Ebene eine geschlossene Linie ist, und **dadurch**, dass nur ein Teil von jedem der Endabschnitte (18, 20, 118, 120) den mechanisch verformbaren Mantel (22) der Faser (2) berührt.

2. System nach Anspruch 1, **dadurch gekennzeichnet, dass** die Endabschnitte (118, 120) jeder Klemmbacke (4) Oberflächen sind, von denen ein Querschnitt gemäß irgend einer durch die Hauptachse (6) der Vorrichtung (1) verlaufende Ebene ein Geradensegment bzw. ein Segment einer Geraden ist.

3. System nach Anspruch 1, **dadurch gekennzeichnet, dass** die Endabschnitte (18, 20) jeder Klemmbacke (4) Oberflächen sind, von denen ein Querschnitt gemäß irgend einer durch die Hauptachse (6) der Vorrichtung (1) verlaufenden Ebene eine gekrümmte Linie ist.

4. System nach einem der vorangehenden Ansprüche, **dadurch gekennzeichnet, dass** die Innenoberfläche (14, 114) jeder Klemmbacke (4) eine Oberfläche ohne scharfen Winkel ist.

5. System nach einem der vorangehenden Ansprüche, **dadurch gekennzeichnet, dass** die Innenoberfläche (14) jeder Klemmbacke (4) eine Oberfläche ist, von der ein Querschnitt gemäß irgend einer zu der Hauptachse (6) der Vorrichtung (1) senkrechten Ebene ein Kreisbogen ist, dessen Radius größer ist als der nominale Außendurchmesser des mechanisch verformbaren Mantels (22).

6. System nach einem der Ansprüche 1 bis 4, **dadurch gekennzeichnet, dass** die Innenoberfläche (114) jeder Klemmbacke (4) eine Oberfläche ist, von der ein Querschnitt gemäß irgend einer zu der Hauptachse (6) der Vorrichtung (1) senkrechten Ebene ein Geradensegment ist.

7. System nach einem der vorangehenden Ansprüche, **dadurch gekennzeichnet, dass** die Klemmbacken (4) der genannten Vorrichtung (1) metallische Klemmbacken sind.

8. System nach einem der vorangehenden Ansprüche, **dadurch gekennzeichnet, dass** jede Klemmbacke (4) auch eine Außenoberfläche (10) mit der Form eines konischen Teilstücks umfasst, wobei jede Außenoberfläche (10) mit einer komplementären konischen Innenoberfläche (12) eines Klemmbackenträgers (8) der genannten Vorrichtung (1) kooperieren kann.

9. System nach einem der vorangehenden Ansprüche, **dadurch gekennzeichnet, dass** die Faser eine optische Faser ist.

10. System nach einem der vorangehenden Ansprüche, **dadurch gekennzeichnet, dass** es in einem Extensometer und/oder einem Bragg-Gitter-Glasfasersensor verwendet werden kann.
